# EUROPEAN PATENT SPECIFICATION

(11) **EP 2 088 604 B1**
(45) Date of publication and mention of the grant of the patent: **12.09.2012**
(21) Application number: 07831480.4
(22) Date of filing: 02.11.2007
(51) Int. Cl.: H01G 9/058, H01G 9/00, H01M 4/06

(54) **ELECTRODE MEMBRANE, ELECTRODE AND METHOD FOR PRODUCING THE SAME, AND ELECTRIC DOUBLE LAYER CAPACITOR**
ELEKTRODENMEMBRAN, ELEKTRODE UND VERFAHREN ZU IHRER HERSTELLUNG UND ELEKTRISCHER DOPPELSCHICHTKONDENSATOR
MEMBRANE D'ÉLECTRODE, ÉLECTRODE ET SON PROCÉDÉ DE PRODUCTION, ET CONDENSATEUR À DOUBLE COUCHE ÉLECTRIQUE

(30) Priority: 02.11.2006 JP 2006298614
(43) Date of publication of application: 12.08.2009
(73) Proprietor: Sumitomo Chemical Company, Limited, Tokyo 104-8260 (JP)
(72) Inventor: EGUCHI, Hironori, Chiba 299-0125 (JP); SHIBUTA, Takumi, St. Paul, MN 55108 (US); SAKAYA, Taiichi, Chiba 266-0031 (JP)
(74) Representative: Vossius & Partner
(86) International application number: PCT/JP2007/071749
(87) International publication number: WO 2008/054029

(56) References cited:
- JP-A- 5 304 048
- JP-A- 8 045 793
- JP-A- 08 045 793
- JP-A- 11 145 012
- JP-A- 57 097 612
- JP-A- 62 040 011
- JP-A- 62 252 369
- JP-A- 2001 223 142
- JP-A- 2002 353 074
- JP-A- 2005 518 662
- US-A- 4 604 788
- US-B1- 6 343 003

## Description

### TECHNICAL FIELD

The present invention relates to an electrode film, which is an element of an electrode, and to an electrode and the method for producing the same. Moreover, the present invention relates to an electric double layer capacitor having the electrode. An electrode film which is referred to in the present invention is a component which constitutes an electrode together with a current collector and serves as a part which substantially accumulates electricity in an electrode.

### BACKGROUND ART

As an electrode to be used for an electric double layer capacitor, etc. has been known an electrode composed of a metal foil serving as a current collector and carbon particles bound with a binder. Conventionally, fluororesins are used as a binder and, in particular, polytetrafluoroethylene (henceforth, referred to as PTFE), which is excellent in heat resistance, chemical resistance and electrochemical stability, is preferably used.

For example, JP-A 11-329904 discloses an electrode obtained by applying a slurry prepared by mixing a dispersion of PTFE in an organic solvent and carbon particles to a current collector, and then removing the organic solvent.

Another example is JP-2002-353074 which discloses an electrode paste comprising a polarisable electrode material and a polymer comprising a constitutional repeating unit having an amide structure. The specific polymer is used as a binder of the electrode paste. Furthermore, the specific polymer preferentially binds to the surface of polarisable material like carbon.

On the other hand, electrodes having a larger electrostatic capacitance have recently been demanded. Among electrodes containing a fluororesin as a binder as mentioned above, no electrodes having a sufficient electrostatic capacitance have not been known, yet, and therefore electrodes having a much larger electrostatic capacitance are demanded.

### DISCLOSURE OF THE INVENTION

The objects of the present invention include to provide an electric double layer capacitor having a large electrostatic capacitance, to provide an electrode having a large electrostatic capacitance which is useful as a component of such an electric double layer capacitor and a method for producing the same, and to provide an electrode film having a large electrostatic capacitance which is useful as a component of such an electrode.

The present invention relates, in one aspect, to an electrode film comprising carbon particles and inorganic particles having a particle diameter within the range of from 1 nm to 100 nm, wherein the carbon particles are bound together by the inorganic particles.

The present invention relates, in another aspect, to an electrode comprising a current collector and an electrode film disposed on the current collector, wherein the electrode film is a film comprising carbon particles and inorganic particles having a particle diameter within the range of from 1 nm to 100 nm, wherein the carbon particles are bound together by the inorganic particles.

The present invention relates, in still another aspect, to a method for producing an electrcde comprising a current collector and an electrode film disposed on the current collector, wherein the method comprises: applying a dispersion liquid comprising carbon particles and inorganic particles having a particle diameter within the range of from 1 nm to 100 nm dispersed in a liquid medium, to a current collector to form a dispersion liquid film, and removing the liquid medium from the dispersion liquid film to form an electrode film comprising the carbon particles and the inorganic particles.

The present invention, relates, in still another aspect, to an electric double layer capacitor comprising: at least one cell that comprises two electrodes comprising a current collector and an electrode film disposed on the current collector and having been arranged with the electrode films opposite each other, and a separator interposed between the electrode films, an electrolytic solution, and a casing containing the at least one cell and the electrolyte, wherein each of the electrode films is a film comprising carbon particles and inorganic particles having a particle diameter within the range of from 1 nm to 100 nm, wherein the carbon particles are bound together by the inorganic particles, i.e., an electrode film of the present invention.

### BRIEF DESCRIPTION OF THE DRAWING

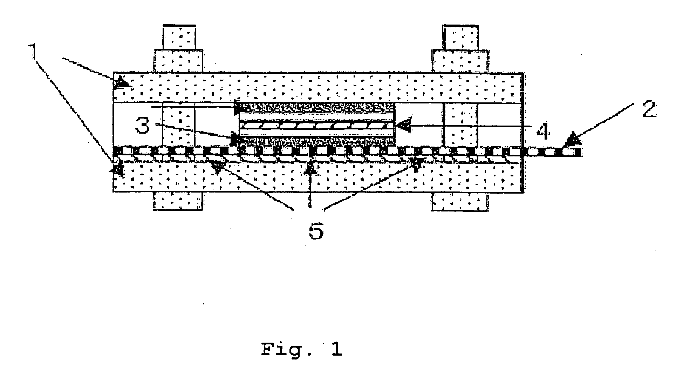

Fig. 1 is a schematic view of the laminated electric double layer capacitors produced in examples of the present invention and comparative examples. In the drawing, reference sign 1 denotes a pressing board, 2 designates a current collector, 3 represents an electrode, 4 denotes a separator, and 5 designates an insulating material.

### MODE FOR CARRYING OUT THE INVENTION

The electrode film of the present invention is made of carbon particles and inorganic particles. The inorganic particles referred to in the present invention are solid particles containing no carbon atoms. It is noted that metal carbonates, such as calcium carbonate, metal prussiates, metal cyanates, and metal thiocyanates are included in inorganic particles even thought they contain carbon. In the electrode film of the present invention, the inorganic particles serve as a binder which bind the carbon particles together. When the electrode film of the present invention is combined with a current collector to constitute an electrode, the inorganic particles function also as a binder which binds the electrode film to the current collector. The electrode film of the present invention is composed substantially only of carbon particles and inorganic particles and, unlike conventional electrode films, contains no organic binders like PTFE. From the viewpoint of binding force to carbon particles and heat resistance of an electrode film, the inorganic particles preferably are silica particles, alumina particles, or mixed particles composed of silica particles and alumina particles, and more preferably are silica particles.

The particle diameter of the inorganic particles preferably is within the range of 1 nm to 100 nm, and more preferably is within the range of 1 nm to 50 nm. Moreover, the particle diameter of the inorganic particles preferably is not greater than the thickness of the electrode film, and more preferably, from the viewpoint of the binding force to carbon particles, is not greater than the particle diameter of the carbon particles, and even more preferably is not greater than 1/10 of the particle diameter of the carbon particles. In the present invention, the particle diameter of inorganic particles is an average particle diameter measured by the use of a laser diffraction/scattering particle size distribution analyzer.

In the present invention, the inorganic particles are not limited in shape. From the viewpoint of the binding force to carbon particles, the inorganic particles preferably are spherical, rod-like or chain-like, and preferably are chain-like particles composed of linked spherical particles. Specific examples of such spherical particles include SNOWTEX ST-XS (trade name) and SNOWTEX ST-XL (trade name) produced by Nissan Chemical Industries, Ltd., and examples of chain-like particles include SNOWTEX PS-S and SNOWTEX PS-SO (trade names) produced by Nissan Chemical Industries, Ltd.

The content of the inorganic particles in the electrode film of the present invention relative to 100 parts by weight of the carbon particles preferably is within the range of 1 to 100 parts by weight from the viewpoint of the strength and the stability of a film. Particularly from the viewpoint of electrostatic capacitance, it more preferably is within the range of 10 to 70 parts by weight, and even more preferably is within the range of 20 to 45 parts by weight.

In the present invention, the carbon particles are particles which contain carbon atoms as the main component, and examples thereof include activated carbon, carbon black such as acetylene black and Ketchen black, graphite, carbon nanotubes, and carbon nanospheres. The carbon particles may be composed of either a single kind of carbon particles or a mixture of two or more kinds of carbon particles. Activated carbon, which has a large specific surface area, is preferably used. It is preferable that the carbon particles contain activated carbon having a specific surface area of 1000 m²/g or more.

In the present invention, from the viewpoint of the strength and the stability of a film, the particle diameter of the carbon particles preferably is within the range of 1. µm to 30 µm. The particle diameter of carbon particles is an average particle diameter measured by the use of a laser diffraction/scattering particle size distribution analyzer. Activated carbon or graphite having such a particle diameter can be obtained by pulverizing commercially available activated carbon or graphite with a pulverizer such as a ball mill. When pulverization is performed with a ball mill, it is preferable that the balls and the pulverizing container be made of nonmetal, such as alumina and agate, in order to avoid the contamination of a metal powder.

From the viewpoint of the electrostatic capacitance of an electrode film, it is preferable to use activated carbon (usually having a particle diameter within the range of 1 µm to 30 µm) and a conducting agent which is smaller in particle diameter than the activated carbon, such as acetylene black, carbon black, graphite, carbon nanotubes and carbon nanospheres, in combination as carbon particles. The particle diameter of the conducting agent preferably is within the range of 1 nm to 100 nm from the viewpoint of the electrostatic capacitance of an electrode. In the present invention, the particle diameter of a conducting agent is an average particle diameter measured by the use of a laser diffraction/scattering particle size distribution analyzer.

When using activated carbon and a conducting agent together as carbon particles, the mixing ratio of both the materials is not particularly limited, but it is preferable to adjust the amount of the conducting agent at within the range of 10 to 50 parts by weight relative to 100 parts by weight of the activated carbon from the viewpoint of the electrostatic capacitance of an electrode film.

The electrode of the present invention is an electrode film comprising a current collector and an electrode film disposed on the current collector, wherein the electrode film is a film comprising carbon particles and inorganic particles having a particle diameter within the range of from 1 nm to 100 nm, the carbon particles being bound by the inorganic particles, namely, the aforementioned electrode film of the present invention. The current collector is usually a foil of metal, and examples of the metal include aluminum, copper and iron. In particular, aluminum is preferred because of its light weight and low electric resistance. The current collector preferably is in the form of a film having a thickness within the range of 20 µm to 100 µm because it is easy to manufacture a wound electrode or a laminated electrode therefrom. In order to improve the adhesiveness between the current collector and the electrode film, it is preferable that the surface of the current collector be roughened by etching or the like.

Next, the electrode film of the present invention and the method of the present invention for producing an electrode are described.

The electrode film of the present invention can be produced by a conventionally known method, such as a sheet forming method in which a mixture of carbon particles and inorganic particles is shaped into a sheet by roll forming or press forming, and an applying method in which a dispersion liquid containing the aforementioned mixture dispersed in a liquidmedium (hereinafter, referred to as a solvent) is applied to a support to form a dispersion liquid film and then the solvent is removed from the dispersion liquid film to form an electrode film. The use of a current collector as the support makes it possible to produce the electrode of the present invention directly.

In the sheet forming method, carbon particles and inorganic particles are charged first at a given ratio into a mixing machine and are mixed to give a paste mixture. At this time, addition of a small amount of solvent can increase the uniformity of the mixture. Next, The paste mixture is shaped into a sheet form by a forming method, such as roll forming, e. g. calendering, and press forming, so that the electrode film of the present invention can be obtained. Moreover, the electrode film obtained by the above-mentioned method may further be rolled for the purpose of makeing it have a given thickness. When the thus obtained electrode film is laminated to a current collector, the electrode of the present invention is obtained. If a solvent remains in the electrode film, the solvent is removed by evaporation.

It is preferable to produce an electrode film by the applying method because an electrode film uniform in thickness can be easily formed thereby. The production of the electrode film of the present invention by the applying method is described here in detail. The applying method is a method in which a dispersion liquid containing carbon particles and inorganic particles dispersed in a solvent is applied to a support (for example, a current collector made of metal foil) to form a dispersion liquid film, and then the solvent is removed from the dispersion liquid film to form an electrode film composed of the carbon particles and the inorganic particles. In the applying method, a dispersion liquid in which carbon particles and inorganic particles are dispersed is prepared first. Examples of the method employed for the preparation of the dispersion liquid include a method in which given amounts of carbon particles and inorganic particles are added to a solvent and then mixed; a method in which a solvent is added to a mixture of given amounts of carbon particles and inorganic particles and then mixed; a method in which a given amount of carbon particles are added to an intermediate dispersion liquid containing a given amount of inorganic particles dispersed in a solvent, and then mixed; a method in which a first intermediate dispersion liquid containing a given amount of inorganic particles dispersed in a solvent and a second intermediate dispersion liquid containing a given amount of carbon particles dispersed in a solvent are mixed; and a method in which inorganic particles are added to an intermediate dispersion liquid containing a given amount of carbon particles dispersed in a solvent, and then mixed. Conventionally known mixing machines may be used for mixing. It is preferable to prepare a dispersion liquid by the method in which carbon particles are added to an intermediate dispersion liquid containing inorganic particles dispersed in a solvent and then mixed because it is easy to disperse inorganic particles and carbon particles more uniformly. In order to obtain an electrode film which is higher in electrostatic capacitance, it is preferable to prepare the dispersion by dispersing carbon particles into colloidal silica, which serves as the intermediate dispersion liquid. Colloidal silica is an aqueous colloid of silica or its hydrate.

In order to form a dispersion liquid film by applying a dispersion liquid to a support, a conventional applicator, such as a handy film applicator, a bar coater and a die coater, may be used. By removing the solvent from the formed dispersion liquid film, it is possible to form an electrode film composed of carbon particles and inorganic particles on the support. As previously described, it is possible to produce the electrode of the present invention directly by using a current collector as the support An example of the method for removing the solvent is a method comprising evaporating the solvent usually at a temperature of 50 to 500°C. When using colloidal silica as an intermediate dispersion liquid, it is preferable to dry it at a temperature of 50 to 80°C for a time period of 1 to 30 minutes first, and further dry at a temperature of 100 to 200°C for a time period of 1 to 60 minutes, from the viewpoint of enhancement of the binding force. After forming an electrode film on a support by the applying method, the electrode film on the support may also be pressed for the purpose of adjusting the thickness of the electrode film.

The electrode of the present invention can be used as electrodes of dry batteries, primary batteries, secondary batteries, redox capacitors, hybrid capacitors, electric double layer capacitors, etc., and it is particularly suitable as an electrode of an electric double layer capacitor.

The present invention is directed, in one aspect, to an electric double layer capacitor having the electrode of the present invention. Specific examples thereof include a capacitor in which a separator is disposed between two electrodes and an electrolytic solution is filled in between the separator and each of the electrodes, and a capacitor in which a solid electrolyte (gel electrolyte) is filled in between two electrodes.

In an electric double layer capacitor, when charging is performed, an electric double layer is formed from a positively charged positive electrode and a negatively charged electrolyte in the vicinity of the interface between the positive electrode and an electrolyte, and at the same time, an electrical double layer is formed with the negatively charged negative electrode and a positively charged electrolyte in the vicinity of the interface between the negative electrode and an electrolyte, so that electric energy is accumulated. Even if the charging is stopped, the electric double layers are maintained. When, discharging is performed, the electric double layers are eliminated, so that electric energy is released.

While an electric double layer capacitor may be a capacitor having only one cell having two electrodes, that is, a pair of a positive electrode and a negative electrode, it may alternatively be a capacitor having two or more such cells.

The electrode of the present invention can be used suitably for an electric double layer capacitor filled with an electrolytic solution. Such an electric double layer capacitor more specifically is an electric double layer capacitor comprising: at least one cell that comprises two electrodes comprising a current collector and an electrode film disposed on the current collector and having been arranged with the electrode films opposite each other, and a separator interposed between the electrode films, an electrolytic solution, and a casing containing the at least one cell and the electrolytic solution, wherein each of the electrode films is a film comprising carbon particles and inorganic particles having a particle diameter within the range of from 1 nm to 100 nm, wherein the carbon particles are bound together by the inorganic particles, i.e., an electrode film of the present invention. Specific examples include coin type capacitors comprising a cell and an electrolytic solution both enclosed together in a coin-shaped container, the cell comprising two disc-shaped electrodes arranged with their electrode films facing each other and a separator disposed between the electrode films; cylindrical capacitors comprising a wound cell and an electrolytic solution enclosed together in a cylindrical container, the cell comprising two sheet-like electrodes arranged with their electrode films facing each other and a separator disposed between the electrode films; and laminated capacitors comprising film-like electrodes and a separator laminated together, and cornice-shaped capacitors.

A mixture of a conventionally known electrolyte and a solvent may be used as the electrolytic solution. The electrolyte may be either an inorganic electrolyte or an organic electrolyte. An inorganic electrolyte is usually mixed with water to form an electrolytic solution. An organic electrolytes is usually mixed with a solvent mainly containing an organic polar solvent to form an electrolytic solution.

As a separator is used an insulating film having a high ion transmittance and a predetermined mechanical strength. Specific examples include paper made from natural fiber such as natural cellulose and Manila hemp; paper made from regenerated fiber or synthetic fiber such as rayon, vinylon and a polyester; mixed paper produced by mixing the aforesaid natural fiber together with the aforesaid regenerated fiber or synthetic fiber; nonwoven fabrics such as polyethylene nonwoven fabric, polypropylene nonwoven fabric, polyester nonwoven fabric and polybutylene terephthalate nonwoven fabric; porous membranes such as porous polyethylene, porous polypropylene and porous polyester; resin films such as para wholly aromatic polyamide, vinylidene fluoride, copolymers of vinylidene fluoride and propylene hexafluoride, and fluorine-containing resin such as fluororubber.

### EXAMPLES

The present invention is described more concretely below with reference to examples, but the invention is not limited to the examples.

### [Example 1]

Activated carbon and acetylene black were used as carbon particles. The activated carbon was prepared by pulverizing RP-15) produced by Kuraray Chemical Co., Ltd. with a ball mill for 18 hours. When a dispersion liquid prepared by dispersing 2 g of the pulverize activated carbon in water was analyzed by the use of a laser diffraction/scattering particle size distribution analyser (HORIBA LA-910), the average particle diameter of the activated carbon was 8 µm. As the acetylene black, DENKA BLACK (average particle diameter = 36 nm; 50% press) produced by Denki Kagaku Kogyo Kabushiki Kaisha was used. As inorganic particles, colloidal silica (SNOWTEX ST-XS, produced by Nissan Chemical Industries, Ltd.; particle shape: spherical; average particle diameter = 4 to 6 nm; solid concentration : 20% by weight) was used.

A slurry having a solid concentration of 25% by weight was prepared by adding 12.5 g of the colloidal silica to 5.0 g of the activated carbon and 0.625 g of the acetylene black (conducting agent), and further adding pure water and mixing. The slurry contained 5.0 g of activated carbon, 0.625 g of acetylene black, and 2.5 g of silica. That is, the amount of inorganic particles per 100 parts by weight of carbon particles was 44.4 parts by weight. The slurry was applied tc an aluminum foil (current collector) having a thickness of 20 µm by using a handy film applicator to form a slurry film, which was then heated at 60°C for 10 minutes and at 150°C for additional 1 hour to remove water. Thus, an electrode having an electrode film disposed on the current collector was obtained. The thickness of the dried electrode film was 60 µm.

From the resulting electrode were cut out two electrodes each having a size of 1.5 cm x 2.0 cm. They were fully dried and then were assembled in a glove box (nitrogen atmosphere) into an electric double layer capacitor illustrated in Fig. 1 by using stainless steel. That is, the two electrodes were arranged so that the electrode film of one electrode would face the electrode film of the other electrode, and a natural cellulose paper (separator) was disposed between the electrode films to form a cell. The cell was enclosed together with an electrolytic solution (LIPASTE-P/TEMAF 14N, produced by Takayama Pure Chemical Industries, Ltd.) into an aluminum container to form an electric double layer capacitor.

The resulting electric double layer capacitor was charged at a constant current of 300 mA/g until the voltage reached 2.8 V, and then was discharged at a constant current until the voltage became 0 V. Thus, the electrostatic capacitance was measured. The result is shown in Table 1.

### [Example 2]

A slurry was prepared by using 3.125 g of colloidal silica (SNOWTEX PS-S (trade name) produced by Nissan Chemical Industries, Ltd.; average particle diameter = 10 to 50 nm; chain-like particles composed of spherical silica linked in a length of 50 to 200 nm; solid concentration : 20% by weight). The slurry contained 5.0 g of activated carbon, 0.625 g of acetylene black, and 0.625 g of silica. That is, the amount of inorganic particles per 100 parts by weight of carbon particles was 11.1 parts by weight. Next, in the same manner as in Example 1, electrodes were produced and an electric double layer capacitor was fabricated. Then, the electrostatic capacitance was measured. The result is shown in Table 1.

### [Example 3]

A slurry was prepared by using 12. 5 g of colloidal silica (SNOWTEX PS-S (trade name) produced by Nissan Chemical Industries, Ltd.; solid concentration : 20% by weight) as inorganic particles. The slurry contained 5.0 g of activated carbon, 0.625 g of acetylene black, and 2.5 g of silica. That is, the amount of inorganic particles per 100 parts by weight of carbon particles was 44.4 parts by weight. Next, in the same manner as in Example 1, electrodes were produced and an electric double layer capacitor was fabricated. Then, the electrostatic capacitance was measured. The result is shown in Table 1.

### [Example4]

A slurry having a solid concentration of 25% by weight was prepared by adding 20.0 g of colloidal silica (SNOWTEX PS-S (trade name) produced by Nissan Chemical Industries, Ltd.; solid concentration : 20% by weight) to 16.0 g of activated carbon and 2.0 g of acetylene black (conducting agent), and further adding pure water and mixing. The slurry contained 16.0 g of activated carbon, 2.0 g of acetylene black, and 4.0 g of silica. That is, the amount of inorganic particles per 100 parts by weight of carbon particles was 22.2 parts by weight. Next, in the same manner as in Example 1, electrodes were produced and an electric double layer capacitor was fabricated. Then, the electrostatic capacitance was measured. The result is shown in Table 1.

### [Example 5]

A slurry having a solid concentration of 25% by weight was prepared by adding 15.0 g of colloidal silica (SNOWTEX PS-S (trade name) produced by Nissan Chemical Industries, Ltd.; solid concentration : 20% by weight) to 8.0 g of activated carbon and 1.0 g of acetylene black (conducting agent), and further adding pure water and mixing. The slurry contained 8.0 g of activated carbon, 1.0 g of acetylene black, and 3. 0 g of silica. That is, the amount of inorganic particles per 100 parts by weight of carbon particles was 33.3 parts by weight. Next, in the same manner as in Example 1, electrodes were produced and an electric double layer capacitor was fabricated. Then, the electrostatic capacitance was measured. The result is shown in Table 1.

### [Example 6]

A slurry having a solid concentration of 25% by weight was prepared by adding 100.0 g of colloidal silica (SNOWTEX PS-S (trade name) produced by Nissan Chemical Industries, Ltd.; solid concentration : 20% by weight) to 32.0 g of activated carbon and 4.0 g of acetylene black (conducting agent), and further adding pure water and mixing. The slurry contained 32.0 g of activated carbon, 4.0 g of acetylene black, and 20.0 g of silica. That is, the amount of inorganic particles per 100 parts by weight of carbon particles was 55.5 parts by weight. Next, in the same manner as in Example 1, electrodes were produced and an electric double layer capacitor was fabricated. Then, the electrostatic capacitance was measured. The result is shown in Table 1.

### [Example 7]

A slurry having a solid concentration of 25% by weight was prepared by adding 30.0 g of colloidal silica (SNOWTEX ST-XS (trade name) produced by Nissan Chemical Industries, Ltd.; particle shape: spherical; solid concentration : 20% by weight) to 16.0 g of activated carbon and 2.0 g of acetylene black (conducting agent), and further adding pure water and mixing. The slurry contained 16.0 g of activated carbon, 2.0 g of acetylene black, and 6.0 g of silica. That is, the amount of inorganic particles per 100 parts by weight of carbon particles was 33.3 parts by weight. Next, in the same manner as in Example 1, electrodes were produced and an electric double layer capacitor was fabricated. Then, the electrostatic capacitance was measured. The result is shown in Table 1.

### [Comparative Example 1]

A slurry was prepared in the same manner as in Example 1, except for using 1.0 g of an aqueous dispersion liquid of fluororesin particles (PTFE Teflon 30-J (trade name) produced by Du Pont-Mitsui Fluorochemicals Company, Ltd.; particle diameter = 0.146 µm; solid concentration : 63% by weight) instead of the colloidal silica. The slurry contained 5.0 g of activated carbon, 0.625 g of acetylene black, and 0.625 g of PTFE. That is, the amount of fluororesin particles per 100 parts by weight of carbon particles was 11.1 parts by weight. Next, in the same manner as in Example 1, electrodes were produced and an electric double layer capacitor was fabricated. Then, the electrostatic capacitance was measured. The result is shown in Table 1.

### [Comparative Example 2]

A slurry having a solid concentration of 30% by weight was prepared in the same manner as in Example 1, except for using 6.25 g of colloidal silica (SNOWTEX MP-2040 (trade name) produced by Nissan Chemical Industries, Ltd.; particle shape: spherical; average particle diameter = 200 nm; solid concentration : 40% by weight). The slurry contained 5.0 g of activated carbon, 0.625 g of acetylene black, and 2.5 g of silica. That is, the amount of inorganic particles per 100 parts by weight of carbon particles was 44.4 parts by weight. Then, an electrode was produced in the same procedure as Example 1. However, the electrostatic capacitance was not able to be measured because film exfoliation occurred when an electric double layer capacitor was assembled.

**Table 1**

| | Activated carbon [g] | Conducting agent [g] | Inorganic particle or FTPE [g] | Electrostatic capacitance [F/g] |
|---|---|---|---|---|
| Example 1 | 5.0 | 0.625 | 2.5 (Particulate silica) | 27.2 |
| Example 2 | 5.0 | 0.625 | 0.625 (Chain-like silica) | 25.6 |
| Example 3 | 5.0 | 0.625 | 2.5 (Chain-like silica) | 28.3 |
| Example 4 | 16.0 | 2.0 | 4.0 (Chain-like silica) | 25.0 |
| Example 5 | 8.0 | 1.0 | 3.0 (Chain-like silica) | 28.8 |
| Example 6 | 32.0 | 4.0 | 20.0 (Chain-like silica) | 27.0 |
| Example 7 | 16.0 | 2.0 | 6.0 (Particulate silica) | 26.3 |
| Comparative Example 1 | 5.0 | 0.625 | 0.625 (PTFE) | 22.3 |
| Comparative Example 2 | 5.0 | 0.625 | 2.5 g (Particulate silica) | Unmeasurable |

### [Evaluation of Adhesiveness]

As to the electrodes obtained in Examples 1 to 7 and Comparative Example 1, the adhesiveness between an electrode film and a current collector was evaluated. The surface of an electrode film was rubbed with a wiping cloth (KIMWIPES S-200 (trade name) produced by NIPPON PAPER CRECIA Co., Ltd.), and then the rubbed surface was visually observed. Moreover, after immersing an electrode in water to impregnate it with water, the same evaluation of adhesiveness was performed. As a result, in both the examinations, the electrode of Example 3 exhibited the least exfoliation of an electrode film, and the exfoliation of an electrode film increased in the order, Example 1, Example 2, Example 5, Example 7, Example 6, Example 4, Example 2, and Comparative Example 1.

### INDUSTRIAL APPLICABILITY

According to the present invention, an electrode film having a large electrostatic capacitance which is useful as a component of an electrode having a large electrostatic capacitance is provided. By the use of the electrode film, an electrode useful as a component of an electric double layer capacitor having a large electrostatic capacitance is provided, and by the use of the electrode, an electric double layer capacitor having a large electrostatic capacitance is further provided. The electric double layer capacitor can be used suitably for memory back-up power sources of laptop PC, cellular phones, etc.; auxiliary power of OA instruments; auxiliary power of motor drive systems of electric cars, hybrid cars, and fuel-cell cars; etc.

## Claims

1. An electrode film comprising carbon particles and inorganic particles, wherein the inorganic particle have an average particle diameter within the range of from 1 nm to 100 nm, wherein the carbon particles are bound together by the inorganic particles.

2. The electrode film according to claim 1, wherein the content of the inorganic particles is within the range of from 10 to 70 parts by weight relative to 100 parts by weight of the carbon particles.

3. The electrode film according to claim 1, wherein the inorganic particles are in spherical form.

4. The electrode film according to claim 3, wherein the spherical inorganic particles are in the form of chains composed of the spherical particles linked together.

5. The electrode film according to claim 1, wherein the inorganic particles are silica particles

6. An electrode comprising a current collector and an electrode film disposed on the current collector, wherein the electrode film is a film comprising carbon particles and inorganic particles having a mean particle diameter within the range of from 1 nm to 100 nm, wherein the carbon particles are bound together by the inorganic particles.

7. A method for producing an electrode comprising a current collector and an electrode film disposed on the current collector, wherein the method comprises: applying a dispersion liquid comprising carbon particles and inorganic particles, wherein the inorganic particles have an average particle diameter within the range of from 1 nm to 100 nm dispersed in a liquid medium, to a current collector to form a dispersion liquid film, and removing the liquid medium from the dispersion liquid film to form an electrode film comprising the carbon particles and the inorganic particles, wherein the inorganic particles serve as a binder which bind the carbon particles together

8. The method according to claim 7, wherein the dispersion liquid is a dispersion liquid prepared by adding carbon particles to an intermediate dispersion liquid comprising inorganic particles having a particle diameter within the range of from 1 nm to 100 nm dispersed in a liquid medium, and dispersing the carbon particles in the intermediate dispersion liquid.

9. The method according to claim 8, wherein the intermediate dispersion liquid is colloidal silica.

10. An electric double layer capacitor comprising: at least one cell that comprises two electrodes comprising a current collector and an electrode film disposed on the current collector and having been arranged with the electrode films opposite each other, and a separator interposed between the electrode films, an electrolytic solution, and a casing containing the at least one cell and the electrolytic solution, wherein each of the electrode films is a film comprising carbon particles and in organic particles wherein the inorganic particles have an average particle diameter within the range of from 1 nm to 100 nm, wherein the carbon particles are bound together by the inorganic particles.

## Patentansprüche

1. Eine Elektrodenfolie, welche Kohlenstoffteilchen und anorganische Teilchen umfasst, wobei die anorganischen Teilchen einen mittleren Teilchendurchmesser innerhalb eines Bereichs von 1 nm bis 100 nm aufweisen, wobei die Kohlenstoffteilchen durch die anorganischen Teilchen miteinander verbunden sind.

2. Die Elektrodenfolie nach Anspruch 1, wobei der Gehalt an anorganischen Teilchen innerhalb eines Bereichs von 10 bis 70 Gewichtsteilen relativ zu 100 Gewichtsteilen an Kohlenstoffteilchen liegt.

3. Die Elektrodenfolie nach Anspruch 1, wobei die anorganischen Teilchen kugelförmig sind.

4. Die Elektrodenfolie nach Anspruch 3, wobei die kugelförmigen anorganischen Teilchen in Form von Ketten vorliegen, die aus den kugelförmigen, miteinander verbundenen Teilchen zusammengesetzt sind.

5. Die Elektrodenfolie nach Anspruch 1, wobei die anorganischen Teilchen Siliciumdioxidteilchen sind.

6. Eine Elektrode, welche einen Stromkollektor und eine auf den Stromkollektor aufgelegte Elektrodenfolie umfasst, wobei die Elektrodenfolie eine Folie ist, welche Kohlenstoffteilchen und anorganische Teilchen mit einem mittleren Teilchendurchmesser innerhalb eines Bereichs von 1 nm bis 100 nm umfasst, wobei die Kohlenstoffteilchen durch die anorganischen Teilchen miteinander verbunden sind.

7. Ein Verfahren zur Herstellung einer Elektrode, welche einen Stromkollektor und eine auf den Stromkollektor aufgelegte Elektrodenfolie umfasst, wobei das Verfahren umfasst: Auftragen einer Dispersionsflüssigkeit, welche in einem flüssigen Medium dispergierte Kohlenstoffteilchen und anorganische Teilchen umfasst, wobei die anorganischen Teilchen einen mittleren Teilchendurchmesser innerhalb eines Bereichs von 1 nm bis 100 nm aufweisen, auf einen Stromkollektor, um einen flüssigen Dispersionsfilm zu bilden, und Entfernen des flüssigen Mediums aus dem flüssigen Dispersionsfilm, um eine Elektrodenfolie zu bilden, welche die Kohlenstoffteilchen und die anorganischen Teilchen umfasst, wobei die anorganischen Teilchen als Bindemittel dienen, welches die Kohlenstoffteilchen zusammen bindet.

8. Das Verfahren gemäß Anspruch 7, wobei die Dispersionsflüssigkeit eine Dispersionsflüssigkeit ist, welche durch die Zugabe von Kohlenstoffteilchen zu einer Zwischendispersionsflüssigkeit, welche in einem flüssigen Medium dispergierte anorganische Teilchen mit einem Teilchendurchmesser innerhalb eines Bereichs von 1 nm bis 100 nm umfasst, und Dispergieren der Kohlenstoffteilchen in der Zwischendispersionsflüssigkeit hergestellt ist.

9. Das Verfahren gemäß Anspruch 8, wobei die Zwischendispersionsflüssigkeit kolloidales Siliciumdioxid ist.

10. Ein elektrischer Doppelschichtkondensator, umfassend: mindestens eine Zelle, welche zwei Elektroden, umfassend einen Stromkollektor und eine auf den Stromkollektor aufgelegte Elektrodenfolie, so angeordnet, dass die Elektrodenfolien einander gegenüberstehen, und einen Separator, der zwischen den Elektrodenfolien angeordnet ist, eine Elektrolytlösung, und ein Gehäuse umfasst, welches die mindestens eine Zelle und die Elektrolytlösung enthält, wobei jede der Elektrodenfolien eine Folie ist, welche Kohlenstoffteilchen und anorganische Teilchen umfasst, wobei die anorganischen Teilchen einen mittleren Teilchendurchmesser innerhalb eines Bereichs von 1 nm bis 100 nm aufweisen, wobei die Kohlenstoffteilchen durch die anorganischen Teilchen miteinander verbunden sind.

## Revendications

1. Film d'électrode comprenant des particules de carbone et des particules inorganiques, dans lequel les particules inorganiques présentent un diamètre moyen de particules dans l'intervalle de 1 nm à 100 nm, dans lequel les particules de carbone sont liées ensemble par les particules inorganiques.

2. Film d'électrode selon la revendication 1, dans lequel la teneur des particules inorganiques se trouve dans l'intervalle de 10 à 70 parties en masse par rapport à 100 parties en masse des particules de carbone.

3. Film d'électrode selon la revendication 1, dans lequel les particules inorganiques sont dans une forme sphérique.

4. Film d'électrode selon la revendication 3, dans lequel les particules inorganiques sphériques sont dans la forme de chaînes constituées des particules sphériques liées ensemble.

5. Film d'électrode selon la revendication 1, dans lequel les particules inorganiques sont des particules de silice.

6. Electrode comprenant un collecteur de courant et un film d'électrode disposé sur le collecteur de courant, dans laquelle le film d'électrode est un film comprenant des particules de carbone et des particules inorganiques ayant un diamètre moyen de particules dans l'intervalle de 1 nm à 100 nm, dans laquelle les particules de carbone sont liées ensemble par les particules inorganiques.

7. Procédé de production d'une électrode comprenant un collecteur de courant et un film d'électrode disposé sur le collecteur de courant, dans lequel le procédé comprend : l'application d'un liquide de dispersion comprenant des particules de carbone et des particules inorganiques, dans lequel les particules inorganiques présentent un diamètre moyen de particules dans l'intervalle de 1 nm à 100 nm dispersées dans un milieu liquide, sur un collecteur de courant pour former un film de liquide de dispersion et l'élimination du milieu liquide du film de liquide de dispersion pour former un film d'électrode comprenant les particules de carbone et les particules inorganiques, dans lequel les particules inorganiques servent de liant qui lie les particules de carbone ensemble.

8. Procédé selon la revendication 7, dans lequel le liquide de dispersion est un liquide de dispersion préparé par addition de particules de carbone à un liquide de dispersion intermédiaire comprenant des particules inorganiques ayant un diamètre de particule dans l'intervalle de 1 nm à 100 nm dispersées dans un milieu liquide, et par dispersion des particules de carbone dans le liquide de dispersion intermédiaire.

9. Procédé selon la revendication 8, dans lequel le liquide de dispersion intermédiaire est la silice colloïdale.

10. Condensateur électrique à double couche comprenant : au moins une cellule qui comprend deux électrodes comprenant un collecteur de courant et un film d'électrode disposé sur le collecteur de courant et ayant été disposées avec les films d'électrode opposés l'un à l'autre, et un séparateur intercalé entre les films d'électrode, une solution électrolytique, et un boîtier contenant la au moins une cellule et la solution électrolytique, dans lequel chacun des films d'électrode est un film comprenant des particules de carbone et des particules inorganiques, dans lequel les particules inorganiques présentent un diamètre moyen de particule dans l'intervalle de 1 nm à 100 nm, dans lequel les particules de carbone sont liées ensemble par les particules inorganiques.
